# EUROPEAN PATENT SPECIFICATION

(11) **EP 0 433 782 B1**
(45) Date of publication and mention of the grant of the patent: **05.07.2000**
(21) Application number: 90123402.1
(22) Date of filing: 06.12.1990
(51) Int. Cl.: H04M 3/56, H04Q 11/04

(54) **Conference network**
Konferenznetzwerk
Réseau de conférence

(30) Priority: 22.12.1989 NO 895209
(43) Date of publication of application: 26.06.1991
(73) Proprietor: THOMSON-CSF NORCOM AS, 0508 Oslo (NO)
(72) Inventor: Presttun, Kare, N-0986 Oslo 9 (NO)
(74) Representative: Guérin, Michel

(56) References cited:
- GB-A- 2 061 670
- GB-A- 2 063 019
- GB-A- 2 157 129
- US-A- 4 455 455
- PROCEEDINGS OF THE CONFERENCE ON THEORY AND APPLICATIONS OF CRYPTOGRAPHIC TECHNIQUES, August 1988, BERLIN DE pages 521 - 528 STEER ET AL. 'A secure audio teleconference system'
- TELESIS / BNR no. 1, 1987, OTTAWA,CA pages 23 - 31 ELLIS ET AL. 'State of the art in teleconferencing'

## Description

The present invention relates to a method to establish a conference connection according to the preamble of claim 1. A conference connection is a connection in a telecommunication network, in which a plurality of people, the conferee, may talk to each other, comment each other and interrupt each other, just if they were present in the same room.

The invention further relates to a node to establish such a conference connection, according to the preamble of claim 7.

It is earlier well known to use conference connections in telecommunications. It may e. g. be referred to a general article by John Ellis and Bruce Townsend, published in Telesis No. 1 1987, pages 22 - 31: "State of the art in teleconferencing". Here both the technical solutions most used and the relevant problems are thoroughly described.

In another paper presented by D. G. Steer et al. in the conference CRYPTO88, on July 29, 1988 under the title: "A Secure Audio Teleconference System" and published in the "PROCEEDINGS OF THE CONFERENCE ON THEORY AND APPLICATIONS OF CRYPTOGRAPHIC TECHNIQUES (CRYPTO88)", August 1988, Berlin (DE), pages 521 to 528, a specific solution of an encrypted teleconference is described. The features of the preambles of claims 1 and 7 are in common with this paper.

The earlier known solutions comprise specific disadvantages as mentioned below.

In the Ellis/Townsend reference all the main problem areas in conventional conference bridges; noise, loss and echo; are pointed out, and these drawbacks are more or less overcome by rather conventional methods. We shall mention that with all the solutions mentioned here we have to use a centrally arranged conference bridge, and all such bridge solutions are not ideal when encrypted speech signals are considered, as the signals exist as plain text in the participant's nodes and in the central equipment, and thus represents a risk of unauthorized tapping of the central equipment.

In the CRYPTO88 reference, there is shown a solution where the terminals which take part in the conference, are connected in series; or rather in a chain; and then a more secure crypto point-to-point connection is possible, as the decryption/encryption process may be undertaken in each terminal and not in the exchange itself.

However such a chain connection requires a two-way communication connection to ensure that all nodes may reach all the other nodes. And due to this known method, the position of the node in the chain connection shall decide the design details of the node itself.

A distributed conference system is also briefly mentioned in this CRYPTO88 reference, but it is not further discussed, as it is deemed to be quite impractical.

The present invention relates in particular to a method and means to establish a conference connection between an arbitrary selected plurality of conference participating nodes selected among a large plurality of nodes interconnectable via at least one telecommunication network equipped with at least one switching exchange, where all the nodes participating in the conference, are connected into series and where the locally generated signals from each of the participating nodes are added to make up a sum conference signal which is made available to all the conference participating nodes, i.e. both active and passive nodes participating in the conference, as stated in the ingress of claim 1 below.

The main object of the present invention is to obtain a new method to establish a conference connection in a telecommunication network, according to which the transmission requirements are reduced to the half compared with the requirements in the CRYPTO88 article. Another object is to introduce a method of establishing a conference connection so that all the nodes participating in the conference may have exactly the same design.

Other objects of this invention are to develop a method which easily may be used to obtain a secured and distributed conference system.

All this objects are fulfilled by using a method and a node design as set forward in claims 1 and 7, respectively. Further advantageous features of the invention are defined in the dependent claims 2-6.

One of the significant details of this invention is that all the nodes participating in a conference are interconnected via the switches of the telecommunication network on a per call basis.

Another significant feature is that all the nodes are interconnected in such a manner that the connection forms a completed ring configuration.

Still further objects and specific features of the method as well as design details of the nodes, are more clearly described in the detailed description of a preferred embodiment of the present invention, as stated below.

To give a better understanding of the principles of the present invention, it is referred to the following description and to the accompanying drawings in which:
Fig. 1 shows the principle of an earlier known conference chain connection according to the above mentioned CRYPTO88 reference.
Fig. 2 shows the principle of a ring connected conference according to the present invention.
Fig. 3 shows the design of a node used in a conference connection according to the present invention, and

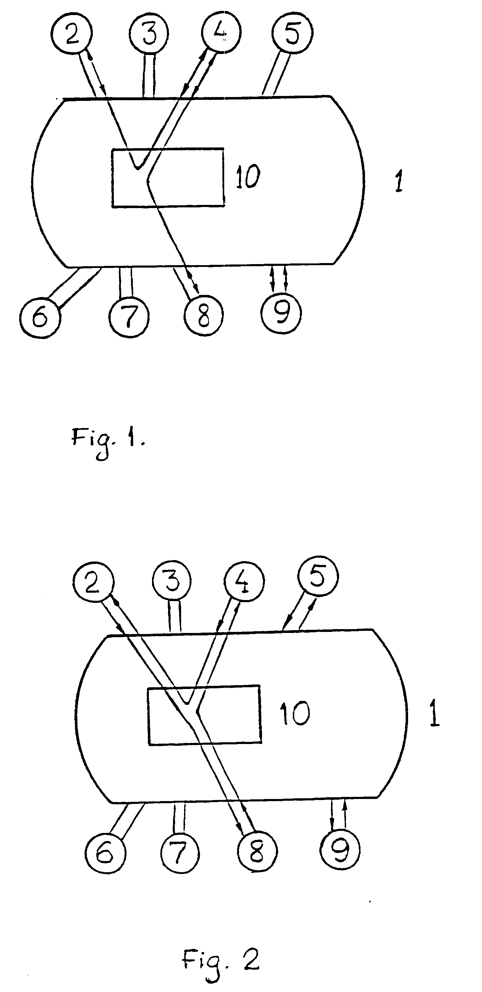

   Figure 1 shows the typical configuration of an earlier known conference system as described in the CRYPTO88 reference. The users 2-9 are all connected in series, via the switch 10 in the telecommunication network 1. More specifically the nodes are connected in a chain, by the communication network 1. In this chain circuit there are included equipment which sum together the speech signals from all the participants and equipment which distribute this sum to all the conferees. As it is seen, the chain connection has to be a two-way connection, otherwise information transmitted from a transmitting node shall not reach the node positioned behind it. Thus information transmitted from node 4 to node 2 passes in one direction, while information from node 4 towards node 8 has the opposite direction.

The network connections may be established with the assistance of a conference operator or it may be a "dial-in" conference where participants dial a special directory number to reach the chain and to be included in the conference.

The chain circuit shown, simply sums the speech signals from each participant and distributes the obtained sum signal as the conference signal for all to hear.

This solution emphasis the principle that the speech is in clear only in the participating nodes where it needs to be in clear for the conferees to hear anyway, and not in any central equipment.

In Fig. 2 the main principle of the present invention is shown.

Here we have the same nodes 2 - 9, a similar telecommunication network 1, and a similar switch 10. However the nodes are not longer connected in a chain, but rather in a ring, as mentioned above. And then a one-way connection is sufficient. Therefore the information handling capacity is doubled by using equipment with approximately the same degree of complexity.Even if the connection is a one-way connection, all the nodes are accessible from any of the other nodes participating in the ring connection. And the symmetry of the circuit ensures that all the nodes may have a completely identical design.

The solution given in this invention is especially well adapted for encrypted conference connection. However it may also be used for conference connections which are not encrypted, but then alternatives exist.

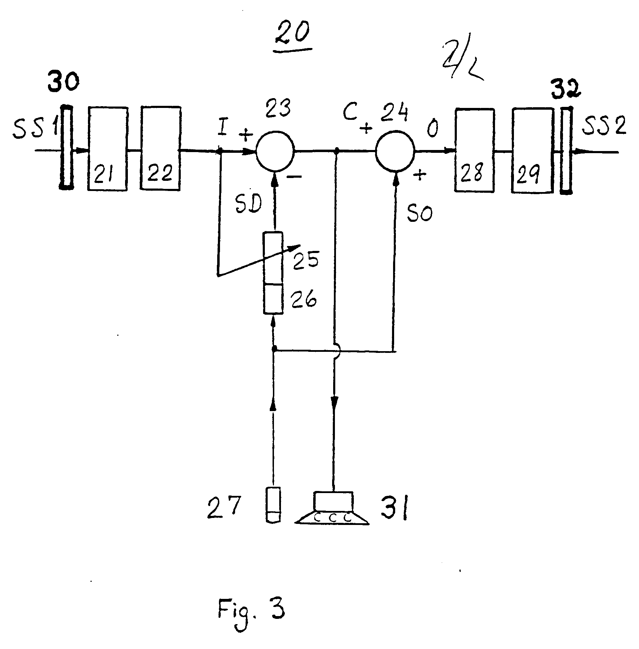

In Fig. 3 there is shown how each node may be designed. The input to a node 20 arrives from the ring connection through an input terminal 30, and implies a decryption device 21, a speech decoder 22, an adder 24 and a subtractor 23. The received, digital sum signal SS1 on the input side, comprises the sum of all signals present on the ring conference connection, inclusive the signal which originates from own node. According to earlier well known technique, such as echo cancelling, the part of the signal which originate from own node is recognized by a correlator 25. A delay circuit 26 is also included, having a delay time corresponding to the circulating time in the ring connection.

The self generated part of the received decoded and decrypted input signal I is deduced by the combination of 23, 25 and 26, and is, after being delayed to the value SD, subtracted from the input signal I in the subtractor 23. Thereafter the new, corrected sum signal C is applied to the loudspeaker 31 and to the adder 24 where also the self generated signal SO, without delay, is received directly from the microphone 27, and from this adder 24, the new output signal O is obtained. The output signal O is via a speech coder 28 and an encryption device 29 applied to the ring connection through an output terminal 32 as a new sum signal SS2. The SS2 signal passes further to the next node in the ring connection.

## Claims

1. Method to establish a conference connection between a group of conference participating nodes (2, 4, 8) which can freely by selected among a greater plurality of nodes (2 - 9) having conference facilities, and which can be interconnected via at least one telecommunication network (1) which is equipped with at least one switching exchange (10), where all the nodes (2, 4, 8) participating in the conference, are connected in series and where the locally generated signals from each of the participating nodes are added to make up a sum conference signal which is made available to all the conference participating nodes, i. e. both active and passive nodes participating in the conference, where all the conference nodes can have completely identical designs, and where the signals exist as plain text only in the conference Participating nodes (2, 4, 8) and not in the telecommunication network (1), so that all signal processing like amplification, speech-coding/decoding can be done decentralized in each conference participating node (2, 4, 8), while routing and switching takes place in the networt exchange(s),
**characterized in** that a conference connection via the network (1) is established on the initiative of one conference node, by dynamically building up a ring connection for each conference, said ring including all the participating nodes (2, 4, 8) so that all conference nodes (2, 4, 8) are symmetrically arranged in the ring, and that the echo of a node-generated signal which has been applied to the ring earlier, is subtracted from the sum signal appearing at that node by means of an echo cancellation technique known per se.

2. Method according to claim 1, and where the ring connection is a single one-way ring connection (fig. 1),
characterized in that the conference is secured against non-authorized tapping as the sum conference signal exists as plain text only in the conference participating nodes (2, 4, 8) and not in the telecommunication network (1) and therefore the sum conference signal is decrypted at the input to and encrypted again at the output from each and every conference participating node (2, 4, 8).

3. Method according to claim 1 or 2, and where the telecommunication network comprises at least one Integrated Services Digital Network (ISDN), **characterized in** **that** each node (2) in succession calls up a desired adjacent node (4) in the desired ring connection on its first B-channel and establishes a connection with this adjacent node in a propagating process, until the conference ring is completed, the last node (8) in the desired ring calling the first, initiating node (2) on its free (second) B-channel, and that only one of the two one-way rings which are then established, are used as a conference ring connection, while the other ring, or possibly the D-channel is used for signalling purposes during the conference set-up.

4. Method according to claim 1, 2 or 3, comprising one complete two-way ring connection, **characterized in that** the conference takes place in one ring only, whereas the other ring is used during the conference, for additional information handling, such as video information, signal duplicating, handshaking or other relevant information to enhance or expand the conference connection.

5. Method according to any of the above claims,
**characterized in that** one or more new conference participating nodes are added by following process:
- it is agreed on at least one new participating node,
- one specific of the already participating nodes breaks its connection to one of its adjacent nodes,
- the new node is called up from said specific participating node, and a new ring connection is established by making the said adjacent node set up a connection to the new node, and vice versa,
- and that possible information about and distribution of the crypto keys are for sent both to the previous and to the new participating node(s) ,
- the new participating node, or its other adjacent node in the new ring, is closing the new ring connection.

6. Method according to any of the claims 1 to 5,
**characterized in that** one or more of the participating nodes may be excluded from the conference by use of the following process:
- some of the participants agree on the exclusion to be done, or the remaining nodes detect that one participant has ended his connection,
- both the adjacent nodes next to the node to be excluded, break the conference ring towards said excluded node,
- a new connection is established between said two adjacent nodes,
- possible new crypto keys are distributed through the new ring connection,
- a conference in the new ring starts.

7. Node included in a digital conference system in a telecommunication network (1) to establish a conference connection, said node being one of a group of conference participating nodes (2, 4, 8) which can freely by selected among a greater plurality of nodes (2 - 9) having conference facilities, and which can be interconnected via said telecommunication network (1) which is equipped with at least one switching exchange (10), where all the nodes (2, 4, 8) participating in the conference are connected in series and where the locally generated signals from each of the participating nodes are added to make up a sum conference signal which is made available to all the conference participating nodes, i. e. both active and passive nodes participating in the conference, where all the conference nodes can have completely identical designs, and where the signals exist as plain text only in the conference participating nodes (2, 4, 8) and not in the telecommunication network (1), so that all signal processing like amplification, speech-coding/decoding can be done decentralized in each conference participating node (2, 4, 8), while routing and switching takes place in the networt exchange(s), **characterized in that** each of the identical nodes (20) comprises: an input terminal (30) for the input signal (SS1), a decryption unit (21) at the input side, a speech decoder (22) at the input side, a correlator (25) which recognizes the part of the input signal that represents the echo of its own transmitted signal, a delay circuit (26), a subtracting circuit (23) where the echo part (SD) of its own transmitted signal is subtracted from the digital decrypted and speech decoded input signal (I), a loudspeaker (31) which is reproducing the resulting echo-reduced sum signal (C), an adding circuit (24) where the locally generated signal (SO) is added to the resulting echo-reduced sum signal, a speech encoder (28) which encodes the new conference sum signal (O), an encryption device (29) which encrypts the new, encoded conference signal, and an output terminal (32) for the new output sum signal (SS2).

## Patentansprüche

1. Verfahren zum Herstellen einer Konferenzverbindung zwischen einer Gruppe von Konferenzteilnehmerknoten (2, 4, 8), die aus einer größeren Anzahl von Knoten (2-9) mit Konferenzdiensten frei gewählt werden können und über wenigstens ein Telekommunikationsnetz (1), das mit wenigstens einer Vermittlungsstelle (10) versehen ist, miteinander verbunden werden können, wobei sämtliche an der Konferenz teilnehmenden Knoten (2, 4, 8) in Reihe verbunden sind und lokal erzeugte Signale von jedem der Teilnehmerknoten addiert werden, um ein Summen-Konferenzsignal zu bilden, das für sämtliche Konferenzteilnehmerknoten, d. h. sowohl für aktive als auch für passive Knoten, die an der Konferenz teilnehmen, verfügbar ist, wobei sämtliche Konferenzknoten vollkommen übereinstimmende Entwürfe besitzen können und wobei die Signale als Klartext nur in den Konferenzteilnehmerknoten (2, 4, 8) und nicht im Telekommunikationsnetz (1) vorhanden sind, so daß die gesamte Signalverarbeitung wie etwa die Verstärkung, die Sprachcodierung/Sprachdecodierung dezentralisiert in jedem Konferenzteilnehmerknoten (2, 4, 8) ausgeführt werden kann, während die Lenkung und die Vermittlung in der bzw. den Netzvermittlungsstellen stattfinden,
**dadurch gekennzeichnet,** daß eine Konferenzverbindung über das Netz (1) auf die Initiative eines Konferenzknotens hin hergestellt wird, indem für jede Konferenz eine Ringverbindung dynamisch aufgebaut wird, wobei der Ring sämtliche Teilnehmerknoten (2, 4, 8) enthält, so daß sämtliche Konferenzknoten (2, 4, 8) im Ring symmetrisch angeordnet sind, und daß das Echo eines von einem Knoten erzeugten Signals, das früher in den Ring eingegeben worden ist, von dem an diesem Knoten auftretenden Summensignal mittels einer an sich bekannten Echobeseitigungstechnik subtrahiert wird.

2. Verfahren nach Anspruch 1, bei dem die Ringverbindung eine einzige Einweg-Ringverbindung (Fig. 1) ist,
dadurch gekennzeichnet, daß die Konferenz gegen unerlaubtes Abhören gesichert ist, da das Summenkonferenzsignal als Klartext nur in den Konferenzteilnehmerknoten (2, 4, 8) und nicht im Telekommunikationsnetz (1) vorhanden ist, weshalb das Summenkonferenzsignal am Eingang jedes Konferenzteilnehmerknotens (2, 4, 8) entschlüsselt und am Ausgang desselben erneut verschlüsselt wird.

3. Verfahren nach Anspruch 1 oder 2, bei dem das Telekommunikationsnetz wenigstens ein diensteintegrierendes digitales Fernmeldenetz (ISDN) enthält, **dadurch gekennzeichnet, daß** jeder Knoten (2) nacheinander einen gewünschten benachbarten Knoten (4) in der gewünschten Ringverbindung auf seinem ersten B-Kanal aufruft und eine Verbindung mit diesem benachbarten Knoten in einem Ausbreitungsprozeß herstellt, bis der Konferenzring vollständig ist, wobei der letzte Knoten (8) in dem gewünschten Ring den ersten Initiierungsknoten (2) auf seinem freien (zweiten) B-Kanal aufruft, und daß nur einer der beiden Einwegringe, die dann hergestellt sind, als eine Konferenzringverbindung verwendet wird, während der andere Ring oder möglicherweise der D-Kanal zu Meldezwecken während des Konferenzaufbaus verwendet wird.

4. Verfahren nach Anspruch 1, 2 oder 3, das eine vollständige Zweiweg-Ringverbindung umfaßt, **dadurch gekennzeichnet, daß** die Konferenz nur in einem Ring stattfindet, während der andere Ring während der Konferenz für eine zusätzliche Informationshandhabung wie etwa Videoinformationen, Signalduplizierung, Quittierung oder andere relevante Informationen verwendet wird, um die Konferenzverbindung zu verbessern oder zu erweitern.

5. Verfahren nach einem der obigen Ansprüche, **dadurch gekennzeichnet,** daß einer oder mehrere neue Konferenzteilnehmerknoten durch den folgenden Prozeß hinzugefügt werden:
- es wird Übereinstimmung über wenigstens einen neuen Teilnehmerknoten erzielt,
- ein bestimmter der bereits teilnehmenden Knoten unterbricht seine Verbindung mit einem seiner benachbarten Knoten,
- der neue Knoten wird vom bestimmten Teilnehmerknoten aufgerufen und eine neue Ringverbindung wird hergestellt, indem der benachbarte Knoten eine Verbindung mit dem neuen Knoten aufbaut und umgekehrt,
- und mögliche Informationen über Verschlüsselungsschlüssel und deren Verteilung sowohl an die bisherigen als auch an den oder die neuen Teilnehmerknoten werden geschickt,
- der neue Teilnehmerknoten oder sein anderer benachbarter Knoten im neuen Ring schließt die neue Ringverbindung.

6. Verfahren nach einem der Ansprüche 1 bis 5,
**dadurch gekennzeichnet,** daß einer oder mehrere der Teilnehmerknoten von der Konferenz durch Verwendung des folgenden Prozesses ausgeschlossen werden können:
- einige der Teilnehmer kommen überein, daß der Ausschluß erfolgen soll, oder die verbleibenden Knoten erfassen, daß ein Teilnehmer seine Verbindung beendet hat,
- die beiden benachbarten Knoten, die sich am nächsten bei dem auszuschließenden Knoten befinden, unterbrechen den Konferenzring zum ausgeschlossenen Knoten,
- zwischen den beiden benachbarten Knoten wird eine neue Verbindung hergestellt,
- mögliche neue Verschlüsselungsschlüssel werden durch die neue Ringverbindung verteilt,
- eine Konferenz im neuen Ring beginnt.

7. Knoten, der in einem digitalen Konferenzsystem in einem Telekommunikationsnetz (1) enthalten ist, um eine Konferenzverbindung herzustellen, wobei der Knoten einer aus einer Gruppe von Konferenzteilnehmerknoten (2, 4, 8) ist, die unter einer größeren Anzahl von Knoten (2-9) mit Konferenzdiensten frei gewählt werden können und über das Telekommunikationsnetz (1), das mit wenigstens einer Vermittlungsstelle (10) ausgerüstet ist, miteinander verbunden werden können, wobei sämtliche Knoten (2, 4, 8), die an der Konferenz teilnehmen, in Reihe verbunden sind und wobei die lokal erzeugten Signale von jedem der Teilnehmerknoten addiert werden, um ein Summenkonferenzsignal zu bilden, das für alle Konferenzteilnehmerknoten, d. h. sowohl für aktive als auch für passive Knoten, die an der Konferenz teilnehmen, verfügbar gemacht wird, wobei sämtliche Konferenzknoten völlig gleiche Entwürfe besitzen und wobei die Signale als Klartext nur in den Konferenzteilnehmerknoten (2, 4, 8) und nicht im Telekommunikationsnetz vorhanden sind, so daß die gesamte Signalverarbeitung wie etwa die Verstärkung, die Sprachcodierung/Sprachdecodierung dezentralisiert in jedem Konferenzteilnehmerknoten (2, 4, 8) ausgeführt werden kann, während die Lenkung und die Vermittlung in den Netzvermittlungen stattfinden, **dadurch gekennzeichnet, daß** jeder der völlig gleichen Knoten (20) umfaßt: einen Eingangsanschluß (30) für das Eingangssignal (SS1), eine Entschlüsselungseinheit (21) auf der Eingangsseite, einen Sprachdecodierer (22) auf der Eingangsseite, einen Korrelator (25), der den Teil des Eingangssignals erkennt, der das Echo seines eigenen gesendeten Signals darstellt, eine Verzögerungsschaltung (26), eine Subtraktionsschaltung (23), in der der Echoanteil (SD) seines eigenen gesendeten Signals von dem digital entschlüsselten und sprachdecodierten Eingangssignal (I) subtrahiert wird, einen Lautsprecher (31), der das sich ergebende, um das Echo verringerte Summensignal (C) wiedergibt, eine Additionsschaltung (24), in der das lokal erzeugte Signal (SO) zum sich ergebenden, um das Echo verringerte Summensignal addiert wird, einen Sprachcodierer (28), der das neue Konferenzsummensignal (O) codiert, eine Verschlüsselungsvorrichtung (29), die das neue, codierte Konferenzsignal verschlüsselt, und einen Ausgangsanschluß (32) für das neue Ausgangssummensignal (SS2).

## Revendications

1. Méthode d'établissement d'une liaison de conférence entre un groupe de noeuds participant à la conférence (2, 4, 8) pouvant être librement sélectionnés parmi un plus grand nombre de noeuds (2 à 9) disposant d'équipements de conférence et pouvant être interconnectés par au moins un réseau de télécommunication (1) équipé d'au moins un central téléphonique (10), où tous les noeuds (2, 4, 8) participant à la conférence sont connectés en série et où les signaux générés au niveau local provenant de chacun des noeuds participants sont ajoutés afin de constituer un signal de conférence global mis à la disposition de tous les noeuds participant à la conférence, c'est-à-dire à la fois les noeuds actifs et passifs participant à la conférence, où tous les noeuds de la conférence peuvent présenter une conception entièrement identique et où les signaux existent uniquement sous forme de texte en clair sur les noeuds participant à la conférence (2, 4, 8) et non sur le réseau de télécommunication (1), de sorte que la totalité du traitement du signal, comme l'amplification, le codage/décodage vocal, puisse être effectuée de manière décentralisée au niveau de chaque noeud participant à la conférence (2, 4, 8), tandis que l'acheminement et la commutation sont effectués au niveau du central du réseau, caractérisé en ce qu'une liaison de conférence via le réseau (1) est établie sur demande d'un noeud participant à la conférence, par établissement dynamique d'une liaison en boucle pour chaque conférence, ladite boucle comprenant tous les noeuds participants (2, 4, 8) de sorte que tous les noeuds participant à la conférence (2, 4, 8) soient disposés de manière symétrique dans la boucle et que l'écho d'un signal généré par les noeuds, appliqué auparavant sur la boucle, soit soustrait du signal global apparaissant au niveau de ce noeud au moyen d'une technique de suppression d'écho connue.

2. Méthode conformément à la Revendication 1 selon laquelle la liaison en boucle est une liaison en boucle unidirectionnelle (fig. 1), caractérisée en ce que la conférence est protégée contre toute écoute non autorisée dans la mesure où le signal de conférence global existe uniquement sous forme de texte en clair sur les noeuds participant à la conférence (2, 4, 8) et non sur le réseau de télécommunication (1) et, par conséquent, le signal de conférence global est décrypté à l'entrée et crypté à nouveau à la sortie de chaque noeud participant à la conférence (2, 4, 8).

3. Méthode conformément à la Revendication 1 ou 2 selon laquelle le réseau de télécommunication comprend au moins un réseau numérique à intégration de services (RNIS), caractérisé en ce que chaque noeud (2) à son tour appelle un noeud adjacent choisi (4) dans la liaison en boucle choisie sur son premier canal B et établit une liaison avec le noeud adjacent au sein d'un processus de propagation, jusqu'à ce que la boucle de conférence soit refermée, le dernier noeud (8) de la boucle choisie appelant le premier, déclenchant ainsi le noeud (2) sur son canal B libre (second) et que seule une des boucles unidirectionnelles ensuite établies, soit utilisée en tant que liaison en boucle de conférence, tandis que l'autre boucle, ou éventuellement le canal D, est utilisée à des fins de signalisation pendant l'établissement de la conférence.

4. Méthode conformément à la Revendication 1, 2 ou 3, comprenant une liaison en boucle bidirectionnelle complète, caractérisée en ce que la conférence se tient sur une boucle uniquement, tandis que l'autre boucle est utilisée pendant la conférence, pour assurer la gestion des informations supplémentaires, comme les informations vidéo, la duplication de signal, l'authentification ou autres informations appropriées pour améliorer et étendre la liaison de conférence.

5. Méthode conformément à une quelconque des revendications susmentionnées caractérisée en ce qu'un ou plusieurs nouveaux noeuds participant à la conférence sont ajoutés selon le processus suivant :
- un nouveau noeud participant au moins est choisi,
- un noeud spécifique sur les noeuds participant déjà à la conférence interrompt sa connexion sur un des noeuds adjacents,
- ledit noeud participant spécifique appelle le nouveau noeud et une nouvelle liaison en boucle est établie en permettant audit noeud adjacent d'établir une connexion sur le nouveau noeud, et vice versa,
- les informations éventuelles sur les touches crypto et leur distribution sont transmises à la fois au noeud précédent et au(x) nouveau(x) noeud(s) participant(s),
- le nouveau noeud participant, ou son autre noeud adjacent dans la nouvelle boucle, referme la nouvelle liaison en boucle.

6. Méthode conformément à une des Revendications 1 à 5, caractérisée en ce qu'un ou plusieurs des noeuds participants peuvent être exclus de la conférence au moyen du processus suivant :
- certains des participants décident de l'exclusion à effectuer ou les noeuds restants détectent qu'un participant a interrompu sa connexion,
- les deux noeuds adjacents au noeud à exclure interrompent la boucle de conférence vers ledit noeud exclu,
- une nouvelle connexion est établie entre lesdits deux noeuds adjacents,
- les éventuelles nouvelles touches crypto sont réparties sur la nouvelle liaison en boucle,
- une conférence est lancée sur la nouvelle boucle.

7. Noeud inclus dans un système de conférence numérique sur un réseau de télécommunication (1) afin d'établir une liaison de conférence, ledit noeud étant un des noeuds appartenant au groupe de noeuds participant à la conférence (2, 4, 8) pouvant être librement sélectionnés parmi un plus grand nombre de noeuds (2 à 9) disposant d'équipements de conférence et pouvant être interconnectés par ledit réseau de télécommunication (1) équipé d'au moins un central téléphonique (10), où tous les noeuds (2, 4, 8) participant à la conférence sont connectés en série et où les signaux générés au niveau local provenant de chacun des noeuds participants sont ajoutés afin de constituer un signal de conférence global mis à la disposition de tous les noeuds participant à la conférence, c'est-à-dire à la fois les noeuds actifs et passifs participant à la conférence, où tous les noeuds de la conférence peuvent présenter une conception entièrement identique et où les signaux existent uniquement sous forme de texte en clair sur les noeuds participant à la conférence (2, 4, 8) et non sur le réseau de télécommunication (1), de sorte que la totalité du traitement du signal, comme l'amplification, le codage/décodage vocal, puisse être effectuée de manière décentralisée au niveau de chaque noeud participant à la conférence (2, 4, 8), tandis que l'acheminement et la commutation sont effectués au niveau du central du réseau, caractérisé en ce que chacun des noeuds identiques (20) comprend :
un terminal d'entrée (30) pour le signal d'entrée (SS1), un module de décryptage (21) du côté entrée, un décodeur vocal (22) du côté entrée, un corrélateur (25) qui reconnaît la partie du signal d'entrée représentant l'écho de son propre signal transmis, un circuit de propagation (26), un circuit de soustraction (23) où la partie écho (SD) de son propre signal transmis est soustraite du signal d'entrée vocal décodé et numérique décrypté (I), un haut-parleur (31) qui reproduit le signal global résultant après réduction de l'écho (C), un circuit d'addition (24) où le signal généré au niveau local (SO) est ajouté au signal global résultant après réduction de l'écho, un codeur vocal (28) qui code le nouveau signal global de conférence (O), un dispositif de cryptage (29) qui crypte le nouveau signal de conférence codé et un terminal de sortie (32) pour le nouveau signal global de sortie (SS2).
